# EUROPÄISCHE PATENTSCHRIFT

(11) **EP 4 219 243 B1**
(45) Veröffentlichungstag und Bekanntmachung des Hinweises auf die Patenterteilung: **05.03.2025**
(21) Anmeldenummer: 23154168.1
(22) Anmeldetag: 31.01.2023
(51) Int. Cl.: B60R 11/04

(54) **VORRICHTUNG FÜR EIN FAHRZEUG UND FAHRZEUG**
DEVICE FOR A VEHICLE AND VEHICLE
DISPOSITIF POUR VÉHICULE ET VÉHICULE

(30) Priorität: 31.01.2022 DE 102022200983; 14.04.2022 DE 102022203794
(43) Veröffentlichungstag der Anmeldung: 02.08.2023
(73) Patentinhaber: Witte Automotive GmbH, 42551 Velbert (DE)
(72) Erfinder: BALZAR, David, 42659 Solingen (DE)
(74) Vertreter: Liedtke & Partner Patentanwälte

(56) Entgegenhaltungen:
- DE-A1- 102012 109 611
- DE-A1- 102015 106 394

## Beschreibung

Die Erfindung betrifft eine Vorrichtung für ein Fahrzeug, insbesondere ein Kraftfahrzeug, mit einer bewegbaren Sensoreinheit. Des Weiteren betrifft die Erfindung ein Fahrzeug mit solch einer Vorrichtung.

Aus dem Stand der Technik sind Vorrichtungen der eingangsgenannten Art, insbesondere eine Ausfahrkinematik einer Sensoreinheit, bekannt, bei welchen die Sensoreinheit, zum Beispiel eine Kamera, über Kulissenführungen oder Gleitbahnen ausfährt. Derartige Vorrichtungen benötigen viel Bauraum, insbesondere eine große Bautiefe, und führen zu Geräuschen. Zum Beispiel sind aus der DE 10 2015 106 394 A1 und DE 10 2012 109 611 A1 Vorrichtungen zur Aufnahme und Verstellung einer Kamera mittels Gelenkmechanismen bekannt.

Aufgabe der vorliegenden Erfindung ist es, eine verbesserte Vorrichtung anzugeben, welche einfach und möglichst geräuscharm aufgebaut ist. Des Weiteren ist ein Fahrzeug mit einer solchen verbesserten Vorrichtung anzugeben.

Die erst genannte Aufgabe wird erfindungsgemäß durch die Merkmale des Patentanspruchs 1 gelöst. Hinsichtlich des Fahrzeugs wird die Aufgabe erfindungsgemäß durch die Merkmale des Patentanspruchs 13 gelöst.

Eine erfindungsgemäße Vorrichtung für ein Fahrzeug umfasst zumindest einen Grundträger mit einer Öffnung und einer bewegbaren Verschlussklappe zum Freigeben oder Verschließen der Öffnung, eine Sensoreinheit ohne eine oder mit einer diese Sensoreinheit zumindest teilweise umschließenden und haltenden Gehäuseeinheit, die in dem Grundträger bewegbar angeordnet ist, und einen Gelenkmechanismus, wobei die Sensoreinheit oder die Gehäuseeinheit mittels des Gelenkmechanismus in dem Grundträger zwischen einer ersten Position, insbesondere eine Ruheposition der Sensoreinheit, und einer zweiten Position, insbesondere einer Betriebsposition der Sensoreinheit, bewegbar ist, in welcher die Sensoreinheit oder die Gehäuseeinheit mit der Sensoreinheit zumindest teilweise aus der Öffnung herausragt, und wobei der Gelenkmechanismus als ein Mehrlenkermechanismus ausgebildet ist und mindestens drei Lenker umfasst, und wobei zwei der drei Lenker jeweils mit einem ersten Lenkerende ortsfest an dem Grundträger angelenkt sind und jeweils mit einem zweiten Lenkerende ortsbeweglich an der Gehäuseeinheit oder der Sensoreinheit angelenkt sind und ein dritter Lenker zwischen der Gehäuseeinheit und dem Verschlusselement oder zwischen dem Grundträger und dem Verschlusselement angelenkt ist.

Ein solcher Mehrlenkermechanismus weist anstelle von Stiften oder Rollen in Führungsbahnen oder Kulissen spielarme Drehgelenke auf. Durch einen solchen Mehrlenkermechanismus (auch Mehrgelenk-Kinematik genannt) können Gleitstellen und Reibstellen reduziert oder gar vermieden werden.

Darüber hinaus ermöglicht eine solche trägerseitige oder fahrzeugseitige ortsfeste Anlenkung von zwei der drei Lenker und eine gehäuseseitige oder sensorseitige ortsbewegliche Anlenkung dieser zwei Lenker eine besonders kleine Durchgangsöffnung für die Sensoreinheit. Unter einer ortsfesten Anlenkung der zwei Lenker am Grundträger wird insbesondere eine ortsfeste schwenkbare Lagerung des ersten Lenkerendes am Grundträger verstanden. Unter einer ortsbeweglichen Anlenkung der zwei Lenker an der Gehäuseeinheit oder direkt an der Sensoreinheit wird insbesondere eine schwenkbare Lagerung des zweiten Lenkerendes an der Gehäuseeinheit beziehungsweise an der Sensoreinheit und eine bewegbare Lagerung relativ zu dem Grundträger oder zu einer Fahrzeughaut verstanden.

Der Mehrlenkermechanismus kann beispielsweise derart ausgebildet und eingerichtet sein, dass die Gehäuseeinheit beim Bewegen von der Ruheposition der Sensoreinheit in die Betriebsposition der Sensoreinheit eine kontinuierliche bogenförmige Ausfahrbewegung ausführt.

Vorzugsweise ist der Mehrlenkermechanismus derart ausgebildet und eingerichtet, dass gleichzeitig mit einer Ausfahrbewegung der Sensoreinheit oder der Gehäuseeinheit mit der Sensoreinheit von der Ruheposition in die Betriebsposition das Verschlusselement von einer die Öffnung für die Sensoreinheit verschließenden Stellung in eine die Öffnung für die Sensoreinheit freigebende Stellung bewegbar ist.

Die Lenker können zum Beispiel jeweils als ein einfacher Lenker, insbesondere ein einfacher Stablenker oder ein einfacher Bügellenker, mit je zwei Gelenken ausgebildet sein, wobei ein erster Lenker und ein zweiter Lenker jeweils zwischen der Gehäuseeinheit und dem Grundträger angelenkt und ein dritter Lenker zwischen der Gehäuseeinheit und der Verschlussklappe angelenkt sind.

Der Gelenkmechanismus kann als ein Mehrlenkermechanismus derart ausgebildet und eingerichtet sein, dass die Sensoreinheit oder die Gehäuseeinheit beim Bewegen von der ersten Position, insbesondere einer Ruheposition der Sensoreinheit, in die zweite Position, insbesondere einer Betriebsposition der Sensoreinheit, eine kombinierte Translationsbewegung und Drehbewegung sowie Schwenkbewegung ausführt.

Der Gelenkmechanismus als ein Mehrlenkermechanismus umfasst mindestens zwei Lenker, die jeweils mit einem ersten Lenkerende an einer ortsfesten Drehachse an dem Grundträger angelenkt sind und jeweils mit einem zweiten Ende an einer beweglichen Drehachse an der Gehäuseeinheit oder der Sensoreinheit angelenkt sind. Dabei können die zweiten Lenkerenden der mindestens zwei Lenker gegenüber dem jeweils zugehörigen ersten Lenkerende, insbesondere dem jeweiligen ortsfesten ersten Lenkerende, mit gleichem Richtungssinn verschwenkbar sein oder verschwenkt werden. Insbesondere ist die Sensoreinheit oder die Gehäuseeinheit mit der Sensoreinheit während der gesamten Bewegung relativ um die Enden an dem Grundträger bewegbar, insbesondere kontinuierlich bogenförmig bewegbar, gelagert.

Die mit der Erfindung erzielten Vorteile bestehen insbesondere darin, dass eine Vorrichtung mit einem solchen Mehrlenkermechanismus mit einfachen und spielarmen Lenkern, insbesondere Stablenkern oder Bügellenkern, mit jeweils zwei Gelenken, insbesondere Drehgelenken, eine präzise Führung und eine sehr geräuscharme Bewegung der Sensoreinheit ermöglicht. Zudem ist eine solche Vorrichtung unempfindlich gegenüber Verschmutzung, da Stifte und Führungsbahnen sowie Gleitstellen und Reibstellen vermieden sind.

Eine Weiterbildung der jeweiligen erfindungsgemäßen Vorrichtung sieht vor, dass der Mehrlenkermechanismus derart ausgebildet und eingerichtet ist, dass die Gehäuseeinheit beim Bewegen von der ersten Position, insbesondere einer Ruheposition der Sensoreinheit, in die zweite Position, insbesondere einer Betriebsposition der Sensoreinheit, eine kontinuierliche Ausfahrbewegung, insbesondere kontinuierliche bogenförmige Ausfahrbewegung, ausführt.

Die jeweiligen Lenker sind beispielsweise als einfache Lenker mit je zwei Gelenken ausgebildet. Die Lenker sind Einzellenker. Beispielsweise ist der jeweilige Lenker als ein L-förmiger Lenker, ein U-förmiger Lenker, ein I-förmiger Lenker oder ein stabförmiger oder bügelförmiger Lenker (auch Stablenker oder Bügellenker genannt) ausgebildet.

Ein weiterer Aspekt sieht vor, dass die als ein Stablenker oder I-förmiger Lenker ausgebildeten Lenker jeweils nur an einer Seite der Gehäuseeinheit angelenkt sind. Insbesondere sind die an der Gehäuseeinheit angelenkten Lenker an gegenüberliegenden Gehäuseseiten angelenkt. Beispielsweise ist ein erster Lenker an einer Außenseite der Gehäuseeinheit angelenkt. Ein zweiter Lenker ist an einer dieser Außenseite gegenüberliegenden Außenseite der Gehäuseeinheit angelenkt.

Beispielsweise sind zumindest zwei der Lenker, die zwischen der Sensoreinheit und dem Grundträger oder der Gehäuseeinheit mit der Sensoreinheit und dem Grundträger angelenkt sind, in der Ruheposition parallel und in einem Abstand zueinander angeordnet. Zumindest einer der Lenker, der zwischen der Gehäuseeinheit und dem Verschlusselement angelenkt ist, ist in der Ruheposition beispielsweise senkrecht zur Öffnungsebene oder einer Verschlussebene des Verschlusselements angeordnet. Darüber hinaus kann die Gehäuseeinheit eine Bogenform aufweisen.

Vorzugsweise kann die Sensoreinheit in der Ruheposition annähernd senkrecht zur Öffnung angeordnet sein. Eine solche annähernd senkrecht zur Öffnung eingenommene Ruheposition der Sensoreinheit ermöglicht die Ausgestaltung der Öffnung möglichst klein. Beispielsweise kann die Öffnung korrespondierend und mit einem geringen Spalt zu dem Außenumfang der Sensoreinheit oder zu dem Außenumfang der Gehäuseeinheit mit Sensoreinheit, insbesondere geringfügig größer, ausgestaltet sein.

Bevorzugt kann das Verschlusselement drehbar am Grundträger oder an der Gehäuseeinheit oder direkt an der Sensoreinheit angeordnet, insbesondere angelenkt, sein.

Des Weiteren kann das Verschlusselement in einer die Öffnung für die Sensoreinheit verschließenden Stellung federvorgespannt gehalten sein.

Ein weiterer Aspekt sieht einen Antrieb, zum Beispiel einen Motor, insbesondere einem Elektromotor, vor, welcher direkt mit einem der Lenker oder indirekt über einen Zwischengelenkmechanismus mit diesem Lenker bewegungsgekoppelt ist. Der Lenker ist als ein Antriebslenker ausgebildet und kann direkt vom Antrieb, insbesondere einem mechanischen Abtrieb, wie zum Beispiel einer Welle oder einem Ritzel, oder indirekt von einem Antriebshebel des Zwischengelenkmechanismus angetrieben sein.

Bei der direkten Kopplung von Antrieb und Lenker des Gelenkmechanismus stimmen eine Abtriebsachse des Antriebs und eine Lenkerachse des als Antriebslenker ausgebildeten Lenkers überein. Mit anderen Worten: Die Abtriebsachse und die Lenkerachse sind als Koaxialachsen ausgebildet und liegen auf derselben Rotationsachse. Bei der indirekten Kopplung von Antrieb und Lenker des Gelenkmechanismus über den Zwischengelenkmechanismus sind die Abtriebsachse des Antriebs und die Lenkerachse des Lenkers versetzt zueinander angeordnet.

Bei der direkten Kopplung bewegen sich der Antrieb und der Lenker in die gleiche Richtung. Bei der indirekten Kopplung können sich der Antrieb, ein Antriebshebel des Zwischengelenkmechanismus sowie der als Antriebslenker ausgebildete Lenker in die gleiche Richtung bewegen.

Bei der indirekten Kopplung von Antrieb und Lenker ist zwischen dem Antrieb und dem als Antriebslenker ausgebildeten Lenker der Zwischengelenkmechanismus angeordnet. Der Zwischengelenkmechanismus kann beispielsweise als ein Kniehebelmechanismus ausgebildet sein. Insbesondere handelt sich um einen Kniehebelmechanismus mit einer Totpunktlage. Im ausgefahrenen Zustand (auch Betriebsposition genannt) und/oder im eingefahrenen Zustand (auch Ruheposition) der Sensoreinheit (insbesondere einer Kamera) ist die ausgefahrene Sensoreinheit beziehungsweise die eingefahrene Sensoreinheit sicher fixiert (auch "verriegelt" genannt). Insbesondere ist die Sensoreinheit mittels des Zwischengelenkmechanismus derart in einer ihrer Endpositionen fixiert, dass diese Position nicht einfach per Hand oder durch Fahrzeugvibrationen geöffnet beziehungsweise geschlossen werden kann. Alternativ kann anstelle des Kniehebelmechanismus ein selbsthemmendes Getriebe vorgesehen sein. Hier können sich aber gegebenenfalls Geräuschprobleme ergeben. Darüber hinaus kann ein solches selbsthemmendes Getriebe einen schlechteren Wirkungsgrad aufweisen.

Ein erster Hebel des Kniehebelmechanismus ist als ein Antriebshebel und ein zweiter Hebel als ein Abtriebshebel ausgebildet. Der Antriebshebel ist mit dem Antrieb, insbesondere dessen mechanischen Abtrieb, gekoppelt. Der Abtriebshebel ist wiederum mit dem als Antriebslenker ausgebildeten Lenker gekoppelt.

Bevorzugt kann der Kniehebelmechanismus als ein bistabiler Kniehebelmechanismus ausgebildet sein. Der bistabile Kniehebelmechanismus kann beispielsweise zwei Stellungen aufweisen: eine erste stabile Stellung und eine zweite stabile Stellung. Die erste stabile Stellung korrespondiert mit der Ruheposition der Sensoreinheit und/oder der verschließenden Stellung des Verschlusselements. Die zweite stabile Stellung korrespondiert mit der Betriebsposition der Sensoreinheit und/oder der freigebenden Stellung des Verschlusselements.

Die Bewegung des Antriebs direkt oder indirekt über den Zwischengelenkmechanismus bewirkt, dass der als Antriebslenker ausgebildete Lenker entlang einer, beispielsweise bogenförmigen, kreissegmentförmigen oder gekrümmten, Fläche, insbesondere einer Führungsrippe, des Grundträgers zwischen der Ruheposition und der Betriebsposition gleitet. Durch die Auslegung des Zwischengelenkmechanismus als bistabiler Kniehebelmechanismus kann dieser in seinen Endpositionen, der Ruheposition und der Betriebsposition jeweils fixiert werden.

Des Weiteren kann das Schloss mindestens einen Endanschlag zur Begrenzung einer Ausfahrbewegung oder einer Einfahrbewegung der Gehäuseeinheit mit Sensoreinheit oder der Sensoreinheit aufweisen.

Beispielsweise kann zumindest einer der Lenker ein oder mehrere Vorsprünge aufweisen, welche den einen Endanschlag beziehungsweise mehrere, zum Beispiel zwei, Endanschläge zur Begrenzung einer Ausfahrbewegung oder einer Einfahrbewegung der Gehäuseeinheit mit Sensoreinheit oder der Sensoreinheit bilden.

Alternativ kann der mindestens eine Endanschlag als ein separater Endanschlag ausgebildet sein. Beispielsweise kann der separate Endanschlag am Grundträger an einer entsprechenden Anschlagposition zur Begrenzung der betreffenden Bewegung (Ausfahrbewegung oder Einfahrbewegung) vorgesehen sein. In einer besonders einfachen Ausführungsform kann ein Lenkerlager des als Antriebslenker ausgebildeten Lenkers des Gelenkmechanismus gleichzeitig als ein Endanschlag für den Zwischengelenkmechanismus ausgebildet sein.

Darüber hinaus ist ein Fahrzeug mit der zuvor beschriebenen erfindungsgemäßen Vorrichtung vorgesehen, wobei die Vorrichtung beispielsweise im Heckbereich oder Frontbereich des Fahrzeugs angeordnet ist.

Ausführungsbeispiele der Erfindung werden anhand von Zeichnungen näher erläutert. Dabei zeigen:
- Figur 1: schematisch ein Fahrzeug mit einer erfindungsgemäßen Vorrichtung,
- Figur 2: schematisch in Seitenansicht eine erfindungsgemäße Vorrichtung mit einem Grundträger und einer Gehäuseeinheit mit einer Sensoreinheit in Ruheposition und einem Mehrgelenkmechanismus zur Verstellung der Gehäuseeinheit mit Sensoreinheit sowie mit einem direkten Antrieb,
- Figur 3: schematisch in einer perspektivischen Darstellung die erfindungsgemäße Vorrichtung,
- Figur 4: schematisch in einer weiteren perspektivischen Darstellung die erfindungsgemäße Vorrichtung mit der Sensoreinheit in der Ruheposition,
- Figur 5: schematisch in einer weiteren Seitenansicht die erfindungsgemäße Vorrichtung mit der Sensoreinheit in der Ruheposition,
- Figur 6: schematisch in perspektivischer Darstellung die erfindungsgemäße Vorrichtung mit der Gehäuseeinheit mit der Sensoreinheit in einer teilausgefahrenen Position,
- Figur 7: schematisch in einer weiteren perspektivischen Darstellung die erfindungsgemäße Vorrichtung mit der Gehäuseeinheit mit der Sensoreinheit in der teilausgefahrenen Position,
- Figur 8: schematisch in Seitenansicht die erfindungsgemäße Vorrichtung mit der Sensoreinheit in der teilausgefahrenen Position,
- Figur 9: schematisch in einer weiteren Seitenansicht die erfindungsgemäße Vorrichtung mit der Sensoreinheit in der teilausgefahrenen Position,
- Figur 10: schematisch eine Schnittdarstellung der erfindungsgemäßen Vorrichtung mit der Sensoreinheit in der teilausgefahrenen Position,
- Figur 11: schematisch in perspektivischer Darstellung die erfindungsgemäße Vorrichtung mit der Gehäuseeinheit mit der Sensoreinheit in einer vollständig ausgefahrenen Position, insbesondere einer Betriebsposition,
- Figur 12: schematisch in einer weiteren perspektivischen Darstellung die erfindungsgemäße Vorrichtung mit der Gehäuseeinheit mit der Sensoreinheit in der vollständig ausgefahrenen Position, insbesondere der Betriebsposition,
- Figur 13: schematisch in Seitenansicht die erfindungsgemäße Vorrichtung mit der Sensoreinheit in der vollständig ausgefahrenen Position, insbesondere der Betriebsposition,
- Figur 14: schematisch in einer weiteren Seitenansicht die erfindungsgemäße Vorrichtung mit der Sensoreinheit in der vollständig ausgefahrenen Position, insbesondere der Betriebsposition,
- Figur 15: schematisch in einer Seitenansicht die Gehäuseeinheit mit dem Mehrgelenkmechanismus und ohne Sensoreinheit und ohne Grundträger,
- Figur 16: schematisch in einer perspektivischen Darstellung die Gehäuseeinheit mit dem Mehrgelenkmechanismus und ohne Sensoreinheit und ohne Grundträger, und
- Figur 17: schematisch in perspektivischer Darstellung eine alternative Ausführungsform einer Vorrichtung mit einem indirekten Antrieb, und
- Figur 18: schematisch die Vorrichtung nach Figur 17 ohne Grundträger in der ausgefahrenen Position oder Betriebsposition.

Einander entsprechende Teile sind in allen Figuren mit den gleichen Bezugszeichen versehen.

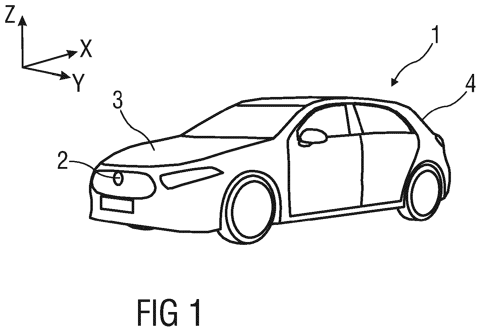

**Figur** 1 zeigt schematisch ein Fahrzeug 1 mit einer erfindungsgemäßen Vorrichtung 2. Beispielsweise ist die Vorrichtung 2 vorn an einer Motorhaube 3 und/oder hinten an einem Heckdeckel 4 angeordnet. Im gezeigten Ausführungsbeispiel ist die Vorrichtung 2 an der Motorhaube 3 angeordnet.

Die Vorrichtung 2 weist eine geschlossene Position auf und eine vollständig geöffnete Position, in welcher eine Umgebung des Fahrzeugs 1 erfasst werden kann.

**Figur 1** zeigt die Vorrichtung 2 in geschlossener Position. Die Vorrichtung 2 ist als eine vormontierte Montageeinheit ausgebildet, die im vormontierten Zustand an dem Fahrzeug 1 angeordnet und befestigt werden kann.

Das in der **Figur 1** schematisch dargestellte Fahrzeug 1 wird nachfolgend unter Verwendung von drei senkrecht zueinander verlaufenden Raumrichtungen beschrieben. Eine Längsrichtung X verläuft weitgehend horizontal und vorzugsweise parallel zu einer Fahrzeuglängsrichtung, die der gewöhnlichen Fahrtrichtung des Fahrzeugs 1 entspricht. Eine zu der Längsrichtung X senkrecht verlaufende Querrichtung Y ist im Fahrzeug 1 ebenfalls horizontal ausgerichtet und verläuft parallel zu einer Fahrzeugquerrichtung. Eine Vertikalrichtung Z verläuft senkrecht zu der Längsrichtung X und senkrecht zu der Querrichtung Y. Beim Fahrzeug 1 verläuft die Vertikalrichtung Z vorzugsweise parallel zu einer Fahrzeughochachse.

Die verwendeten Positionsangaben und Richtungsangaben, wie beispielsweise vorn, hinten, oben und unten beziehen sich auf eine Blickrichtung eines im Fahrzeug 1 sitzenden Insassen in normaler Sitzposition und in Fahrtrichtung schauend.

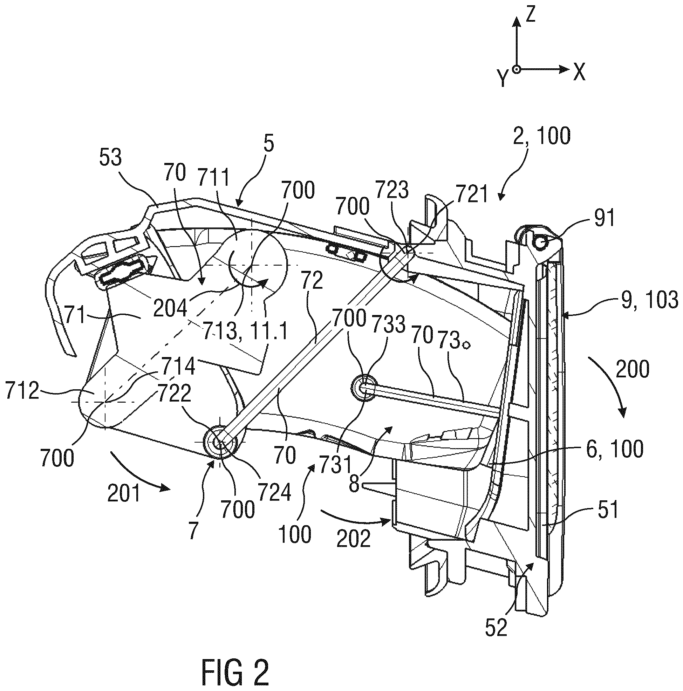

**Figur 2** zeigt schematisch in einer Seitenansicht die erfindungsgemäße Vorrichtung 2 als Montagemodul. Alle nachfolgenden Komponenten der Vorrichtung 2 sind zu dem Montagemodul vormontiert.

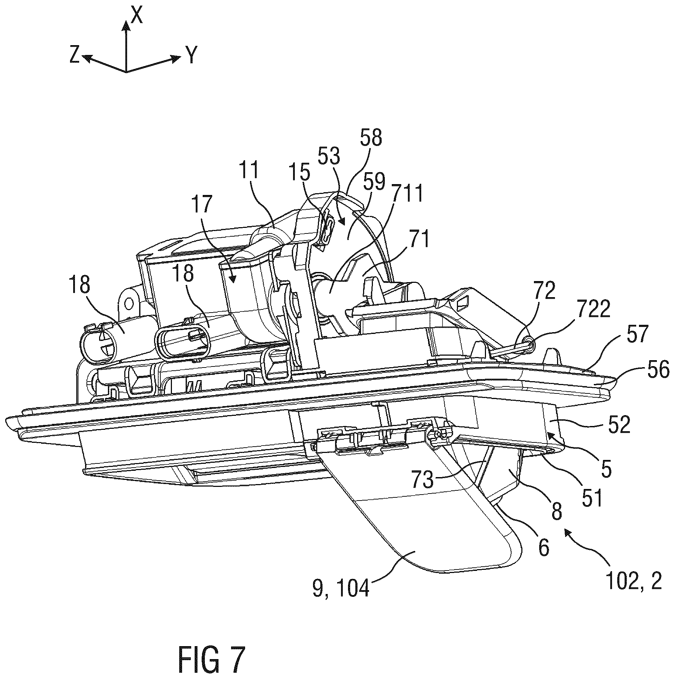

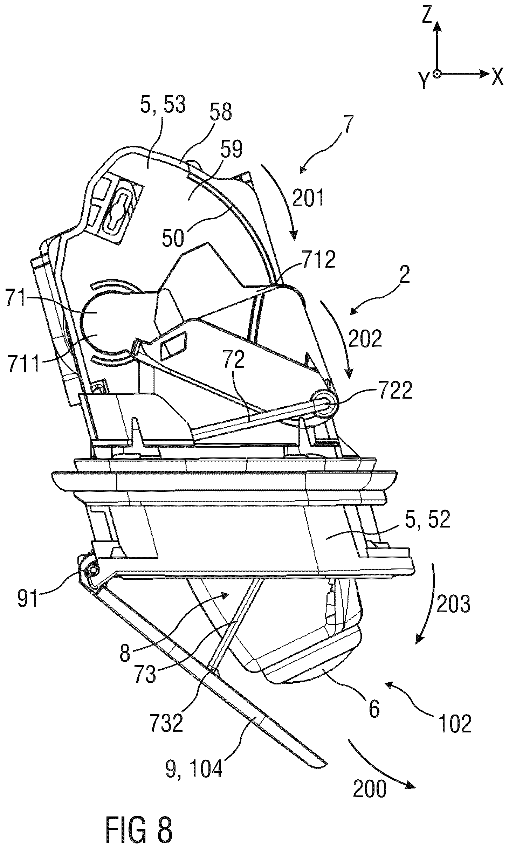

Die Vorrichtung 2 umfasst zumindest einen Grundträger 5 mit einer beispielsweise in den **Figuren 7** **und** **8** gezeigten, verschließbaren Öffnung 51 und ein relativ zum Grundträger 5 bewegbares Verschlusselement 9, insbesondere einer Verschlussklappe, zum Freigeben oder Verschließen der Öffnung 51, eine Sensoreinheit 6 und einen Gelenkmechanismus 7 zur Verstellung der Sensoreinheit 6 relativ zu dem Grundträger 5.

Des Weiteren umfasst die Vorrichtung 2 eine Gehäuseeinheit 8, welche die Sensoreinheit 6 zumindest bereichsweise umgibt. Die Gehäuseeinheit 8 ist darüber hinaus als Halterung für die Sensoreinheit 6 ausgebildet und wird auch als Sensorhalter bezeichnet. Die Sensoreinheit 6 ist geschützt in der Gehäuseeinheit 8 angeordnet und gehalten. Die Gehäuseeinheit 8 und mit diesem die Sensoreinheit 6 sind in dem Grundträger 5 bewegbar angeordnet. Alternativ kann die Gehäuseeinheit 8 entfallen und die Sensoreinheit 6 direkt in oder an dem Grundträger 5 beweglich angeordnet sein. Nachfolgend wird die Erfindung anhand der Gehäuseeinheit 8 und der an dieser befestigten Sensoreinheit 6 beschrieben.

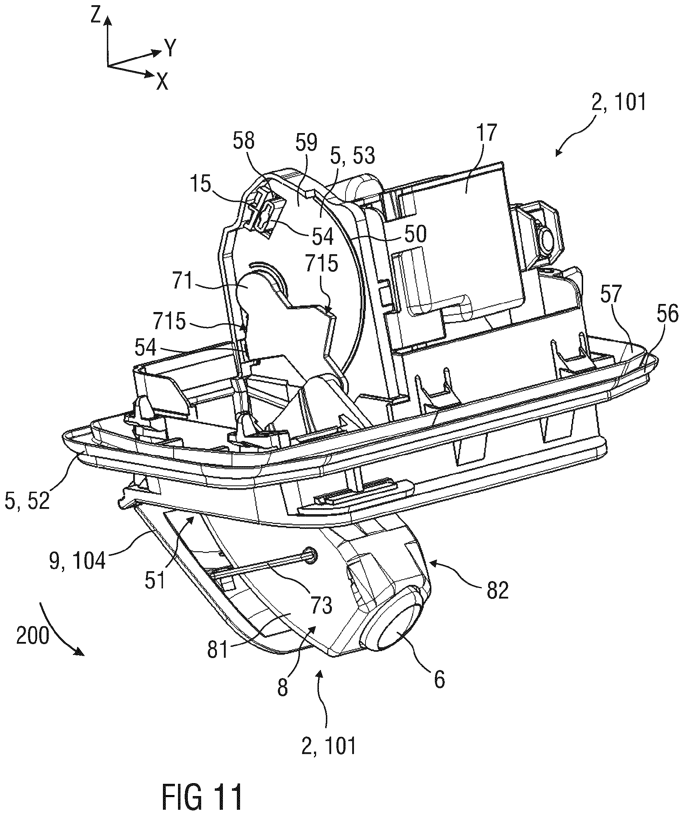

Die Gehäuseeinheit 8 ist mittels des Gelenkmechanismus 7 in dem Grundträger 5 zwischen einer ersten Position, insbesondere einer Ruheposition 100 (beispielsweise dargestellt in den **Figuren 2 bis 5****)** der Sensoreinheit 6, und einer zweiten Position, insbesondere einer Betriebsposition 101 der Sensoreinheit 6 (beispielsweise dargestellt in **Figuren 11 bis 14****),** bewegbar, insbesondere ausfahrbar oder umgekehrt einfahrbar. In der Betriebsposition 101 ragt die Gehäuseeinheit 8 mit der Sensoreinheit 6 zumindest teilweise aus der Öffnung 51 heraus.

In der Ruheposition 100 ist die Gehäuseeinheit 8 mit der Sensoreinheit 6 im Grundträger 5 hinter der Öffnung 51 angeordnet und mittels des die Öffnung 51 abdeckenden Verschlusselements 9 geschützt angeordnet. In der Ruheposition 100 ist die Sensoreinheit 6 annähernd senkrecht zur Öffnung 51 angeordnet. Eine solche Anordnung ermöglicht eine kleine Öffnung 51.

Im gezeigten Ausführungsbeispiel ist das Verschlusselement 9 drehbar am Grundträger 5 angeordnet. Alternativ kann das Verschlusselement 9 an der Gehäuseeinheit 8 oder der Sensoreinheit 6 drehbar angeordnet sein (nicht näher dargestellt).

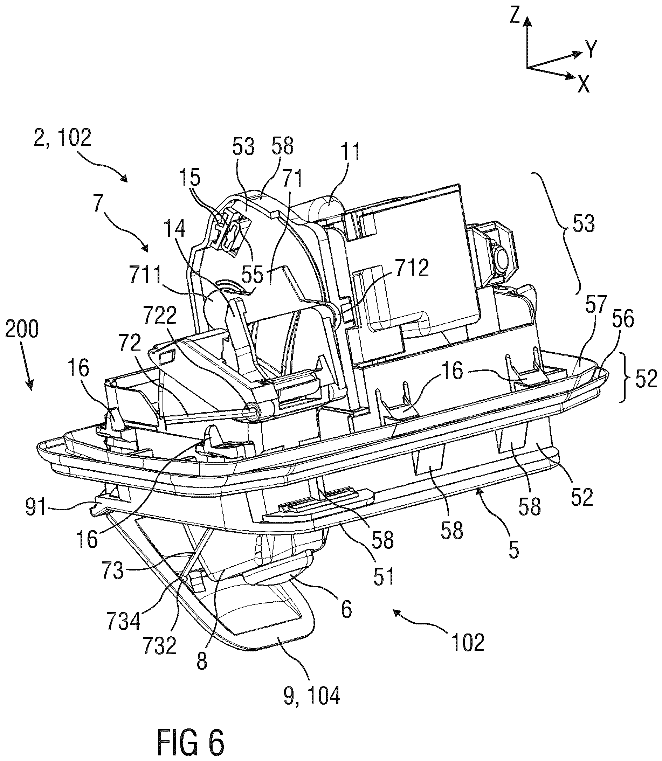

Das Verschlusselement 9 ist zwischen einer die Öffnung 51 verschließenden Stellung 103 (dargestellt in Figuren 2 bis 5) und einer die Öffnung 51 freigebenden Stellung 104 (dargestellt in Figuren 6 bis 9, 11 bis 14) bewegbar. In der die Öffnung 51 verschließenden Stellung 103 ist das Verschlusselement 9 federvorgespannt gehalten.

Der Gelenkmechanismus 7 ist insbesondere als ein Mehrlenkermechanismus derart ausgebildet und eingerichtet, dass die Gehäuseeinheit 8 mit der Sensoreinheit 6 oder die Sensoreinheit 6 beim Bewegen von der ersten Position, insbesondere der Ruheposition 100 der Sensoreinheit 6, in die zweite Position, insbesondere der Betriebsposition 101 der Sensoreinheit 6, eine kontinuierliche Ausfahrbewegung, insbesondere eine bogenförmige Bewegung 200 schräg nach unten und nach vorne in Richtung der Öffnung 51 und raus aus der Öffnung 51, ausführt. Insbesondere setzt sich die bogenförmige Bewegung 200 der Gehäuseeinheit 8 mit der Sensoreinheit 6 aus zwei bogenförmigen Teilbewegungen 201 und 202 des Gelenkmechanismus 7 mit gleichem Richtungssinn zusammen. Diese bogenförmigen Teilbewegungen 201 und 202 des Gelenkmechanismus 7 bewirken die kontinuierliche bogenförmige Bewegung 200 der Gehäuseeinheit 8 mit Sensoreinheit 6 oder der Sensoreinheit 6.

Mit anderen Worten: Der Gehäuseeinheit 8 mit der Sensoreinheit 6 oder alternativ der Sensoreinheit 6 (direkt) wird mittels des Gelenkmechanismus 7 eine bogenförmige Bewegung, insbesondere eine Bewegung auf einem Kreisbogenabschnitt, beispielsweise schräg nach unten und vorne, in Richtung der Öffnung 51 und aus dieser heraus aufgezwungen. Bei der bogenförmigen Bewegung 200 (dargestellt in Figuren 2 und 8) überlagern sich eine geradlinige Bewegung oder Translationsbewegung, insbesondere eine kombinierte Senkbewegung oder Hubbewegung mit einer dazu senkrechten Vorwärtsbewegung beziehungsweise Rückwärtsbewegung, zu der bogenförmigen Bewegung 200, die sich aus zwei bogenförmigen Teilbewegungen 201 und 202 des Gelenkmechanismus 7 (dargestellt in Figuren 2 und 8) zusammensetzt. Die gesamte Bewegung der Gehäuseeinheit 8 mit der Sensoreinheit 6 oder der Sensoreinheit 6 alleine ist insbesondere eine kombinierte geradlinige und rotatorische Ausfahrbewegung oder Einfahrbewegung.

Darüber hinaus kann der als Mehrlenkermechanismus ausgebildete Gelenkmechanismus 7 beispielsweise derart ausgebildet und eingerichtet sein, dass gleichzeitig mit der Ausfahrbewegung der Sensoreinheit 6 von der Ruheposition 100 in die Betriebsposition 101 das Verschlusselement 9 von der die Öffnung 51 verschließenden Stellung 103 in die die Öffnung 51 freigebende Stellung 104 bewegbar ist.

Auch kann der als Mehrlenkermechanismus ausgebildete Gelenkmechanismus 7 beispielsweise derart ausgebildet und eingerichtet sein, dass gleichzeitig mit der Einfahrbewegung der Sensoreinheit 6 von der Betriebsposition 101 in die Ruheposition 100 das Verschlusselement 9 von der die Öffnung 51 freigebenden Stellung 104 in die die Öffnung 51 verschließende Stellung 103 bewegbar ist.

Der Gelenkmechanismus 7 ist insbesondere als ein Mehrlenkermechanismus ausgebildet sein und mindestens zwei Lenker 70 umfassen, die jeweils als ein einfacher Lenker 70 mit je zwei Gelenken 700, insbesondere Drehgelenken, ausgebildet sind.

Die mindestens zwei Lenker 70, insbesondere ein erster Lenker 71 und ein zweiter Lenker 72, sind beispielsweise jeweils mit einem ersten Lenkerende 711 beziehungsweise 721 an einer ortsfesten Drehachse 713 beziehungsweise 723 an dem Grundträger 5 angelenkt und jeweils mit einem zweiten Lenkerende 712 beziehungsweise 722 an einer beweglichen Drehachse 714 beziehungsweise 724 an der Gehäuseeinheit 8 angelenkt.

Dabei sind die zweiten Lenkerenden 712 und 722 der mindestens zwei Lenker 70, insbesondere 71 und 72, gegenüber dem jeweils zugehörigen ersten, insbesondere ortsfesten, Lenkerende 711 beziehungsweise 721 mit gleichem Richtungssinn bewegbar, insbesondere verschwenkbar. Die beiden zweiten Lenkerenden 712 und 722 üben die bogenförmigen Teilbewegungen 201 beziehungsweise 202 aus, welche mit gleichem Richtungssinn um die ortsfesten Drehachsen 713 beziehungsweise 723 der ersten Lenkerenden 711 beziehungsweise 721 ausgeführt werden und sich zu der kontinuierlichen bogenförmigen Bewegung 200 der Gehäuseeinheit 8 überlagern.

Die zwei Lenker 70, insbesondere der erste Lenker 71 und der zweite Lenker 72, die zwischen der Gehäuseeinheit 8 und dem Grundträger 5 angelenkt sind, sind in der Ruheposition 100 parallel und in einem Abstand zueinander angeordnet. Dies ermöglicht eine besonders kompakte Bauform.

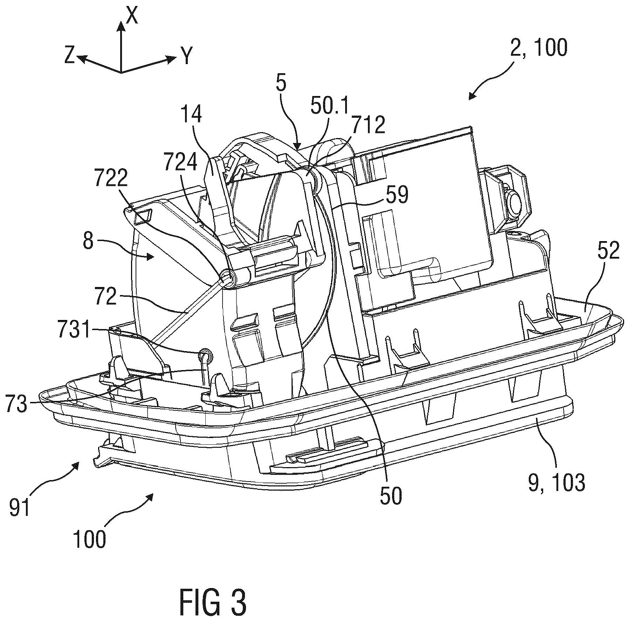

Die Vorrichtung 2 weist einen Antrieb 11, insbesondere einen Motor, wie zum Beispiel einen Elektromotor, (dargestellt in Figuren 3 und 6, 7) auf. Der erste Lenker 71 ist als ein Antriebslenker ausgebildet. Ein mechanischer Abtrieb, zum Beispiel ein Abtriebsritzel oder eine mechanische Abtriebswelle, des Antriebs 11 ist mit dem ersten Lenker 71 direkt gekoppelt. Bei der direkten Kopplung von Antrieb 11 und erstem Lenker 71 des Gelenkmechanismus 7 stimmen eine Abtriebsachse 11.1 des Antriebs 11 und eine Lenkerachse (= die ortsfeste Drehachse 713) des als Antriebslenker ausgebildeten ersten Lenkers 71 überein. Mit anderen Worten: Die Abtriebsachse 11.1 des Antriebs 11 und die ortsfeste Lenkerachse oder Drehachse 713 des ersten Lenkers 71 sind als Koaxialachsen ausgebildet und liegen auf derselben Rotationsachse. Bei dieser direkten Kopplung von Antrieb 11 und erstem Lenker 71 bewegen sich der Antrieb 11 und der erste Lenker 71 in dieselbe Drehrichtung 204 um dieselbe Rotationsachse, welche der ortsfesten Drehachse 713 entspricht.

Die Bewegung des Antriebs 11 bewirkt, dass der als Antriebslenker ausgebildete erste Lenker 71 entlang einer, beispielsweise bogenförmigen, kreissegmentförmigen oder gekrümmten, Fläche, insbesondere einer Führungsrippe 50 (dargestellt in Figur 3), des Grundträgers 5 zwischen der Ruheposition 100 und der Betriebsposition 101 gleitet.

Zusätzlich kann ein dritter Lenker 73 vorgesehen sein. Der dritte Lenker 73 ist beispielsweise zwischen der Gehäuseeinheit 8 und dem Verschlusselement 9 angelenkt. Der dritte Lenker 73 ist ein Verbindungslenker, der das Verschlusselement 9 mit der Gehäuseeinheit 8 oder mit der Sensoreinheit 6 verbindet. Der dritte Lenker 73 ist in der Ruheposition 100 der Vorrichtung 2, insbesondere einer geschlossenen Position, senkrecht zur Öffnungsebene einer Öffnung 51 oder einer Verschlussebene des Verschlusselements 9 angeordnet.

Darüber hinaus kann der erste Lenker 71 an einer Außenseite der Gehäuseeinheit 8 angelenkt sein. Der zweite Lenker 72 ist an einer dieser Außenseite gegenüberliegenden Außenseite der Gehäuseeinheit 8 angelenkt, wie dies in **Figur 6** gezeigt ist.

Beispielsweise kann der jeweilige Lenker 70 als ein Einzellenker, insbesondere ein einfacher Stablenker oder ein einfacher Bügellenker, mit je zwei Gelenken 700 ausgebildet sein. Insbesondere kann der jeweilige Lenker 70 als ein Hebel ausgebildet sein, der einseitig oder beidseitig rotatorisch an der Gehäuseeinheit 8 angelenkt ist. Ein einseitig rotatorisch an der Gehäuseeinheit 8 angelenkter Lenker 70 ist beispielsweise als ein einfacher Stab mit zwei entgegengesetzt abgewinkelten Enden als Drehzapfen ausgebildet. Ein beidseitig rotatorisch an der Gehäuseeinheit 8 angelenkter Lenker 70 ist beispielsweise als ein Bügellenker, insbesondere ein u-förmiges Profil mit zwei nach innen abgewinkelten freien Enden, die als Drehzapfen dienen, ausgebildet.

Der erste Lenker 71, insbesondere ein oberer oder von der Öffnung 51 am weitesten entfernter Lenker 70, und der zweite Lenker 72, insbesondere ein unterer oder näher an der Öffnung 51 angeordneter Lenker 70, sind jeweils zwischen der Gehäuseeinheit 8 und dem Grundträger 5 angelenkt. Der dritte Lenker 73 ist zwischen der Gehäuseeinheit 8 und dem Verschlusselement 9 angelenkt.

Der erste Lenker 71 (auch oberer Lenker genannt) ist beispielsweise ein einfacher Stablenker, der mit einem ersten Lenkerende 711 an dem Grundträger 5, insbesondere an einem oberen Ende des Grundträgers 5, und mit einem zweiten Lenkerende 712 an der Gehäuseeinheit 8, insbesondere an einem oberen Ende der Gehäuseeinheit 8, angelenkt ist. Der erste Lenker 71 ist insbesondere ein Flachprofil oder ein Bandprofil mit an den Lenkerenden 711 und 712 entgegengesetzt abstehenden Gelenkzapfen mit zugehörigen Drehachsen 713 und 714.

Der zweite Lenker 72 (auch mittiger Lenker genannt) ist beispielsweise ein einfacher Stablenker, der mit einem ersten Lenkerende 721 an dem Grundträger 5, insbesondere an einem von der Öffnung 51 abgewandten Gehäuseende oder mittig am Grundträger 5, und mit einem zweiten Lenkerende 722 an der Gehäuseeinheit 8, insbesondere an einem von der Öffnung 51 abgewandten Gehäuseende oder mittig an der Gehäuseeinheit 8, angelenkt ist. Der zweite Lenker 72 ist insbesondere ein Drahtprofil oder ein Bandprofil mit an den Lenkerenden 721 und 722 entgegengesetzt abstehenden Gelenkzapfen mit zugehörigen Drehachsen 723 und 724.

Der dritte Lenker 73 (auch unterer Lenker oder Verbindungslenker genannt) ist beispielsweise ein einfacher Stablenker, der mit einem ersten Lenkerende 731 an dem Grundträger 5, insbesondere an einem unteren Ende des Grundträgers 5, und mit einem zweiten Lenkerende 732 an dem Verschlusselement 9, insbesondere mittig an dem Verschlusselement 9, angelenkt ist.

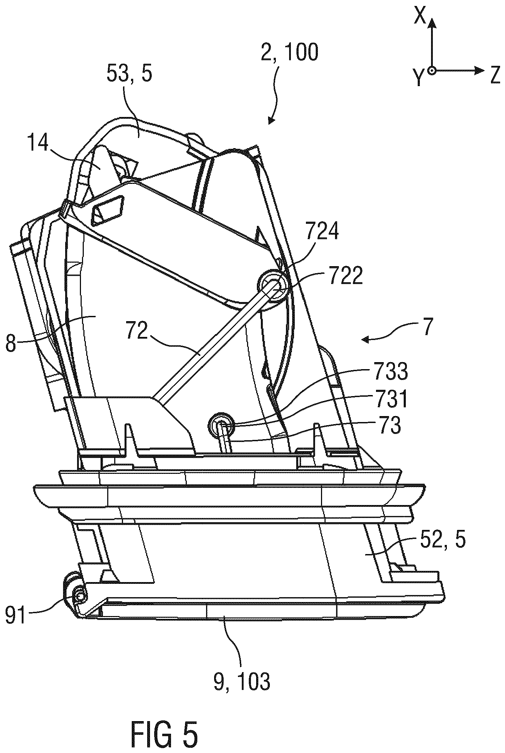

Der dritte Lenker 73 ist insbesondere ein Drahtprofil oder ein Bandprofil mit an den Lenkerenden 731 und 732 (dargestellt in **Figuren 5** **und** **6****)** entgegengesetzt abstehenden Gelenkzapfen mit zugehörigen Drehachsen 733 und 734 (dargestellt in **Figuren 5** **und** **6****).**

Der erste Lenker 71 und der zweite Lenker 72 sind in der Ruheposition 100 der Vorrichtung 2 parallel und in einem Abstand zueinander angeordnet. Der erste Lenker 71 weist eine kürzere Länge als der zweite Lenker 72 auf. Ein erstes Lenkerende 721 des zweiten Lenkers 72 ist in Längsrichtung X gesehen zwischen einem ersten Lenkerende 711 und einem zweiten Lenkerende 712 des ersten Lenkers 71 angeordnet.

Der dritte Lenker 73 ist in der Ruheposition 100 der Vorrichtung 2 annähernd senkrecht zur Öffnungsebene der Öffnung 51 oder Verschlussebene des Verschlusselements 9 angeordnet. Ein erstes Lenkerende 731 des dritten Lenkers 73 ist in Längsrichtung X gesehen zwischen einem ersten Lenkerende 721 und einem zweiten Lenkerende 722 des zweiten Lenkers 72 angeordnet.

Die Gehäuseeinheit 8 weist eine Bogenform auf.

Der Grundträger 5 ist ein feststehendes Bauteil, welches an einem Fahrzeugelement, zum Beispiel der Motorhaube 3, feststehend montierbar ist. Der Grundträger 5 kann einteilig oder mehrteilig ausgebildet sein.

Der Gelenkmechanismus 7 ist zur Führung der Bewegung der Gehäuseeinheit 8 relativ zu dem Grundträger 5 ausgebildet. Der Gelenkmechanismus 7 ist zwischen der Gehäuseeinheit 8 und dem Grundträger 5 und/oder zwischen der Gehäuseeinheit 8 und dem Verschlusselement 9 angeordnet.

Der Grundträger 5 umfasst ein vorderes Trägerteil 52, welches die verschließbare Öffnung 51 umfasst. Zusätzlich kann der Grundträger 5 ein hinteres Trägerteil 53 aufweisen. Die Öffnung 51 ist mittels des Verschlusselements 9, insbesondere einem Schutzelement, einem Deckel oder einer Klappe, verschließbar.

In **Figur 2** ist das Verschlusselement 9 in einer Schließstellung gestellt, in welcher das Verschlusselement 9 die Öffnung 51, insbesondere mediendicht, gegenüber der Umgebung abschließt. Dabei liegt das Verschlusselement 9 in der Öffnung 51 diese abdichtend an einer Innenwandung der Öffnung 51 an. Das Verschlusselement 9 ist an einem Lagerende 91 drehbar an dem Grundträger 5 (wie dargestellt) oder an der Gehäuseeinheit 8 gelagert.

Die Sensoreinheit 6 ist in **Figur 2** in Ruheposition 100 dargestellt. Die Ruheposition 100 ist eine geschützte Lage bei Nichtgebrauch. In dieser Ruheposition 100 ist die Sensoreinheit 6 innerhalb des Grundträgers 5, insbesondere in der Gehäuseeinheit 8, hinter der Öffnung 51 (dargestellt in **Figur 2****)** geschützt und vom Verschlusselement 9 abgedeckt angeordnet.

Die Sensoreinheit 6 ist zwischen der Ruheposition 100 und der Betriebsposition 101 (dargestellt in **Figur 11****),** insbesondere eine Betriebslage im Gebrauch, bewegbar. Die Sensoreinheit 6 umfasst beispielsweise als Sensor eine Kamera zur Detektion und Überwachung eines Bereichs um eine Fahrzeugkomponente herum. Vorzugsweise handelt es sich bei der Kamera um eine Frontkamera an der Motorhaube 3 oder eine Rückfahrkamera am Heckdeckel 4.

Zur Verstellung der Sensoreinheit 6 relativ zum Grundträger 5 zwischen der Ruheposition 100 und der Betriebsposition 101 ist der als Mehrlenkermechanismus ausgebildete Gelenkmechanismus 7 vorgesehen.

**Figur 3** zeigt schematisch in einer weiteren perspektivischen Darstellung die erfindungsgemäße Vorrichtung 2 mit dem zweiten Lenker 72 und dem dritten Lenker 73. Der erste Lenker 71 ist nur teilweise dargestellt. Lediglich das an der Gehäuseeinheit 8 angelenkte zweite Lenkerende 712 des ersten Lenkers 71 ist sichtbar. Zur Führung des ersten Lenkers 71 ist an einer Trägerwand 59 des Grundträgers 5 eine Führungsrippe 50 angeformt. Das zweite Lenkerende 712 des ersten Lenkers 71 weist beispielsweise eine Führungsrolle 50.1 auf, die entlang der Führungsrippe 50 geführt wird, wenn die Sensoreinheit 6 eingefahren oder ausgefahren wird.

Zur lösbaren Befestigung der Vorrichtung 2 an der Motorhaube 3 (auch Fronthaube genannt, dargestellt in **Figur** 1) oder am Heckdeckel 4 (dargestellt in **Figur** 1) kann diese Vorrichtung 2 ein lösbares Befestigungsmittel 14, insbesondere einen Rasthaken oder einen Rastarm, aufweisen.

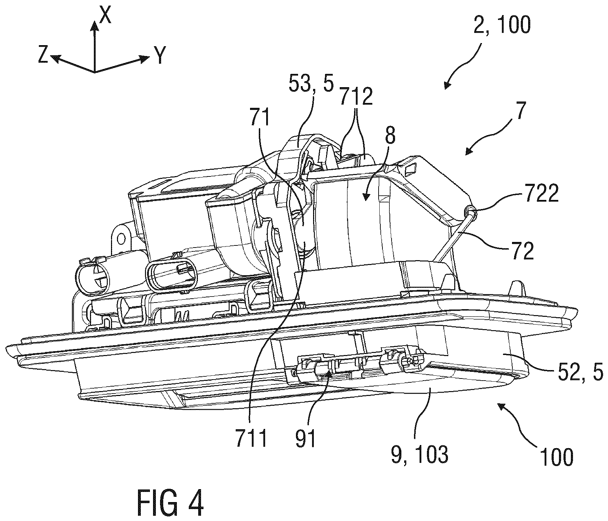

**Figur 4** zeigt schematisch in einer weiteren perspektivischen Darstellung schräg von hinten die erfindungsgemäße Vorrichtung 2 mit der Sensoreinheit 6 (dargestellt in **Figur 2** **oder** **6****)** in der Ruheposition 100.

**Figur 5** zeigt schematisch in einer weiteren Seitenansicht die erfindungsgemäße Vorrichtung 2 mit der Sensoreinheit 6 (dargestellt in **Figur 2** **oder** **6****)** in der Ruheposition 100.

**Figur 6** zeigt schematisch in perspektivischer Darstellung die erfindungsgemäße Vorrichtung 2 mit der Gehäuseeinheit 8 mit der Sensoreinheit 6 in einer teilausgefahrenen Position 102 (auch Zwischenposition genannt).

Zusätzlich können in dem Grundträger 5 Steckeröffnungen 55, durch welche Anschlusselemente 15, insbesondere elektrische Anschlüsse, insbesondere zur Stromversorgung, und/oder elektronische Anschlüsse, insbesondere ein LAN-Anschluss oder CAN-Anschluss oder ein anderer Kommunikationsanschluss, für den Antrieb 11 durchragen.

Zusätzlich können weitere Befestigungsmittel 16, insbesondere Rastnasen oder Rastarme oder dergleichen, am Grundträger 5 vorgesehen sein, um diesen an der Motorhaube 3 (auch Fronthaube genannt, dargestellt in **Figur 1****)** oder am Heckdeckel 4 (dargestellt in **Figur 1****)** formschlüssig und/oder kraftschlüssig anzuordnen und lösbar zu befestigen.

Zur Verstellung der Gehäuseeinheit 8 ist der elektrische Antrieb 11, insbesondere ein Elektromotor, vorgesehen. Der Antrieb 11 kann in einer als Gehäuse 17 dienenden Trägeraufnahme des Grundträgers 5 oder eines separaten Teilträgers, insbesondere eines Elektrokomponententrägers, geschützt angeordnet sein.

Der Grundträger 5 umfasst das vordere Trägerteil 52, welches die verschließbare Öffnung 51 umfasst, die von dem Verschlusselement 9 verschließbar ist. Zusätzlich umfasst der Grundträger 5 das hintere Trägerteil 53.

Ferner weist der Grundträger 5, insbesondere das vordere Trägerteil 52, einen Rand 56 auf, der sowohl die Öffnung 51 für die Sensoreinheit 6 als auch einen Trägerbereich 57 für den Antrieb 11 umlaufend ausgebildet ist. Der umlaufende Rand 56 kann darüber hinaus mit einer umlaufenden Dichtung 57, insbesondere eine umlaufende Dichtlippe, versehen sein. Beispielsweise kann die Dichtung 57 separat als ein Dichtungsring oder als eine integrierte, insbesondere an den Rand 56 angeformte Dichtung 57 ausgebildet sein.

Der Grundträger 5 kann darüber hinaus mit Verstärkungselementen 58, insbesondere Rippen, Stege, Nuten, Rillen, oder dergleichen versehen sein.

**Figur 7** zeigt schematisch in einer weiteren perspektivischen Darstellung die erfindungsgemäße Vorrichtung 2 mit der Gehäuseeinheit 8 mit der Sensoreinheit 6 in der teilausgefahrenen Position 102.

Die Antrieb 11 kann in einem separaten Gehäuse 17, insbesondere einem Teilgehäuse, zum Beispiel einem separaten Elektrokomponententräger, angeordnet sein. Der Antrieb 11 mit seinem Gehäuse 17 kann dabei auf einer Seite einer Trägerwand 59 des Grundträgers 5 angeordnet sein. Die verstellbare Sensoreinheit 8 mit ihrer Gehäuseeinheit 8 kann auf einer gegenüberliegenden Seite der Trägerwand 59 angeordnet sein.

Zusätzlich können weitere Anschlusselement 18, insbesondere elektrische Anschlüsse, insbesondere zur Stromversorgung, und/oder elektronische Anschlüsse, insbesondere ein LAN-Anschluss oder ein CAN-Anschluss oder ein anderer Kommunikationsanschluss, für den Antrieb 11 oder eine andere Komponente der Vorrichtung 2 vorgesehen sein.

**Figur 8** zeigt schematisch in Seitenansicht die erfindungsgemäße Vorrichtung 2 mit der Gehäuseeinheit 8 mit der Sensoreinheit 6 in der teilausgefahrenen Position 102.

Der Gelenkmechanismus 7 umfasst die drei Lenker 71, 72 und 73, die zeitgleich bei einer Verstellbewegung ihre bogenförmigen Teilbewegungen 201 bis 203 ausführen, wobei sich die bogenförmigen Teilbewegungen 201 und 202 zu der bogenförmigen Bewegung 200 der Gehäuseeinheit 8 mit Sensoreinheit 6 oder nur der Sensoreinheit 6 überlagern. Die bogenförmige Teilbewegung 203 stellt die Aufklappbewegung des Verschlusselements 9 dar.

Zur Führung der bogenförmigen Teilbewegung 201 des ersten Lenkers 71 ist an der Trägerwand 59 die Führungsrippe 50 angeformt. Das zweite Lenkerende 712 des ersten Lenkers 71 weist beispielsweise ein Führungsstift (nicht näher dargestellt) oder eine Führungsrolle 50.1 (dargestellt in Figur 3) auf, der beziehungsweise die entlang der Führungsrippe 50 geführt wird.

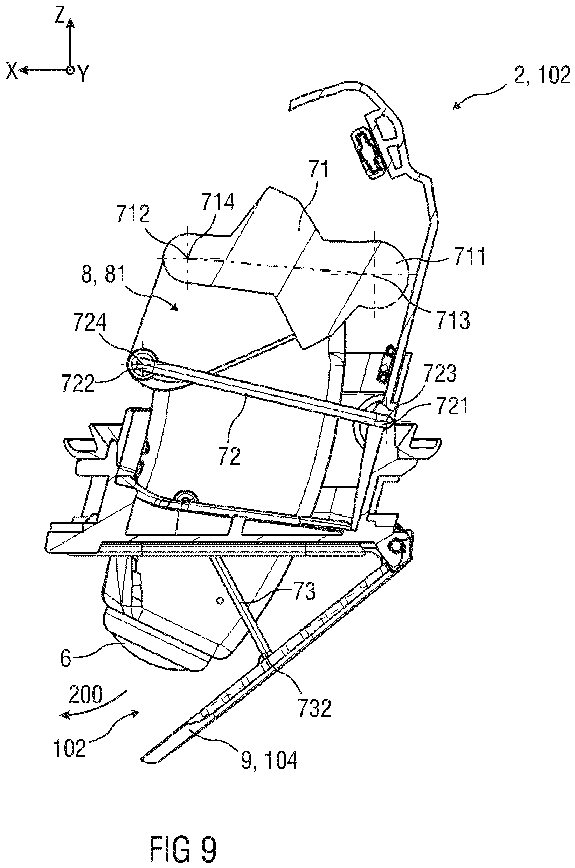

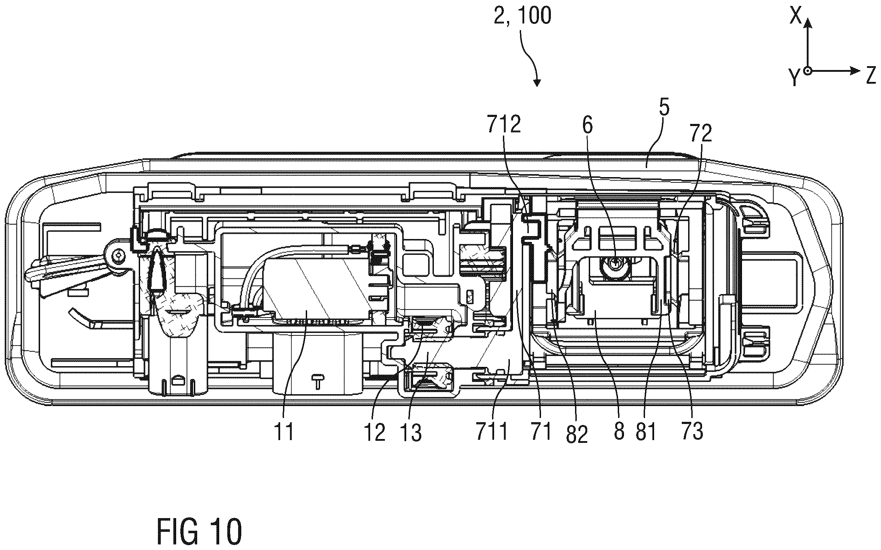

**Figur 9** zeigt schematisch in einer weiteren Seitenansicht die erfindungsgemäße Vorrichtung 2 mit der Gehäuseeinheit 8 mit der Sensoreinheit 6 in der teilausgefahrenen Position 102. Der zweite Lenker 72 und der dritte Lenker 73 sind an einer ersten Gehäuseseite 81 der Gehäuseeinheit 8 angelenkt. Der erste Lenker 71 ist in gestrichelter Darstellung gezeigt und ist an einer zweiten Gehäuseseite 82 (dargestellt in **Figuren 10** **und** **11****),** der gegenüberliegenden Seite der Gehäuseeinheit 8, angelenkt.

**Figur 10** zeigt eine Schnittdarstellung der Vorrichtung 2 mit der Gehäuseeinheit 8 mit der Sensoreinheit 6 in der halb geöffneten oder teilausgefahrenen Position 102. Die Sensoreinheit 6 wird zwischen ihrer Ruheposition 100 (dargestellt in **Figuren 2 bis 6****)** und ihrer Betriebsposition 101 (dargestellt in **Figur 11 bis 14****)** kontinuierlich bewegt, zum Beispiel mittels des Antriebs 11, insbesondere einem elektrischen Antriebsmotor. Zur Verdeutlichung der Abläufe bei dieser Bewegung ist die teilausgefahrene Position 102 als Momentaufnahme dargestellt.

Der Antrieb 11 ist über ein Getriebe 12 zum Beispiel mit dem ersten Lenker 71 über eine Abtriebswelle 13 bewegungsgekoppelt.

**Figur 11** zeigt schematisch in perspektivischer Darstellung die erfindungsgemäße Vorrichtung 2 mit der Gehäuseeinheit 8 mit der Sensoreinheit 6 in einer vollständig ausgefahrenen Position, insbesondere in der zweiten Position oder Betriebsposition 101. Der erste Lenker 71 weist erste Vorsprünge 715 auf, welche als Anschläge zur Begrenzung der Einfahrbewegung und Ausfahrbewegung der Gehäuseeinheit 8 gemäß Pfeil 200 dienen. Die Vorsprünge 715 schlagen jeweils an korrespondierende Endanschläge 54 am Grundträger 5 an.

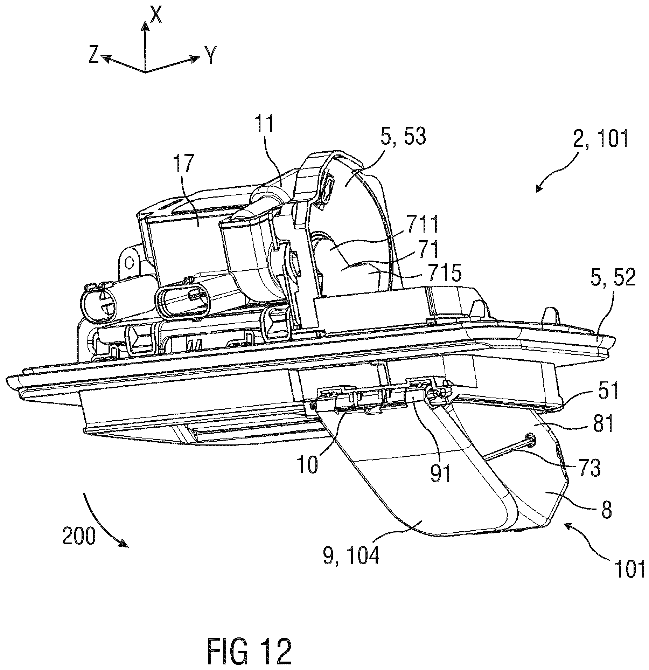

**Figur 12** zeigt schematisch in einer weiteren perspektivischen Darstellung die erfindungsgemäße Vorrichtung 2 mit der Gehäuseeinheit 8 mit der Sensoreinheit 6 (dargestellt in **Figur 11****)** in der vollständig ausgefahrenen Position, insbesondere in der zweiten Position oder Betriebsposition 101. Das Verschlusselement 9 kann darüber hinaus im Bereich des Lagerendes 91 federvorgespannt gelagert sein. Beispielsweise kann ein Federelement 10, insbesondere eine Schraubenfeder, im Bereich des Lagerendes 91 angeordnet sein. Mittels des Federelements 10 wird das Verschlusselement 9 in der Ruheposition 100 der Vorrichtung 2 und damit in der die Öffnung 51 verschließenden Stellung federvorgespannt gehalten, insbesondere geräuscharm und klapperfrei gehalten.

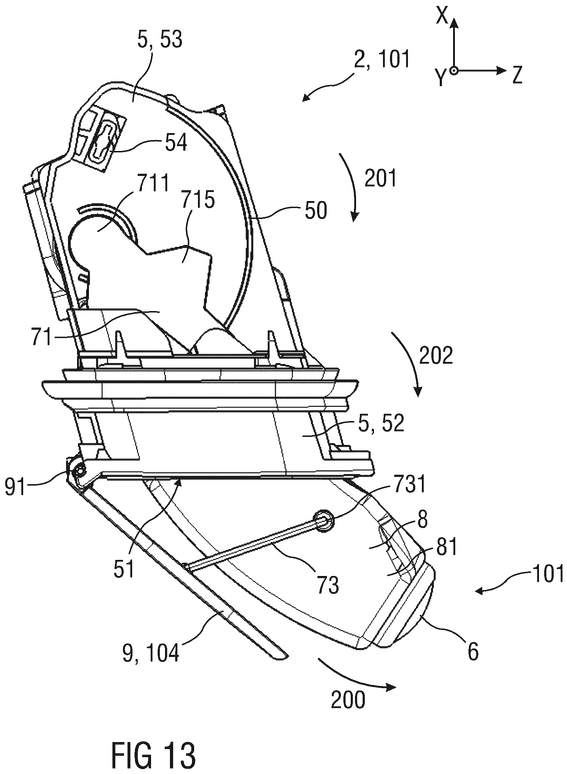

**Figur 13** zeigt schematisch in Seitenansicht die erfindungsgemäße Vorrichtung 2 mit der Gehäuseeinheit 8 mit der Sensoreinheit 6 in der vollständig ausgefahrenen Position, insbesondere in der zweiten Position oder Betriebsposition 101.

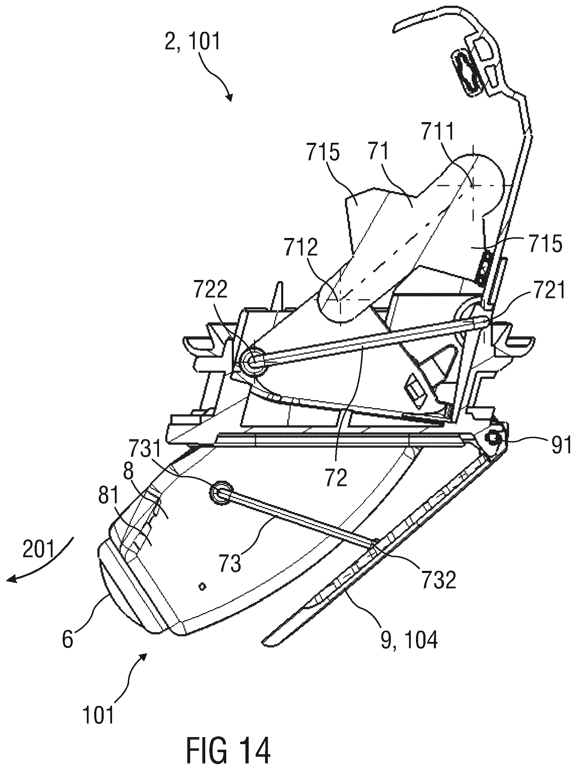

**Figur 14** zeigt schematisch in einer weiteren Seitenansicht die erfindungsgemäße Vorrichtung 2 mit der Gehäuseeinheit 8 mit der Sensoreinheit 6 in der vollständig ausgefahrenen Position, insbesondere in der zweiten Position oder Betriebsposition 101.

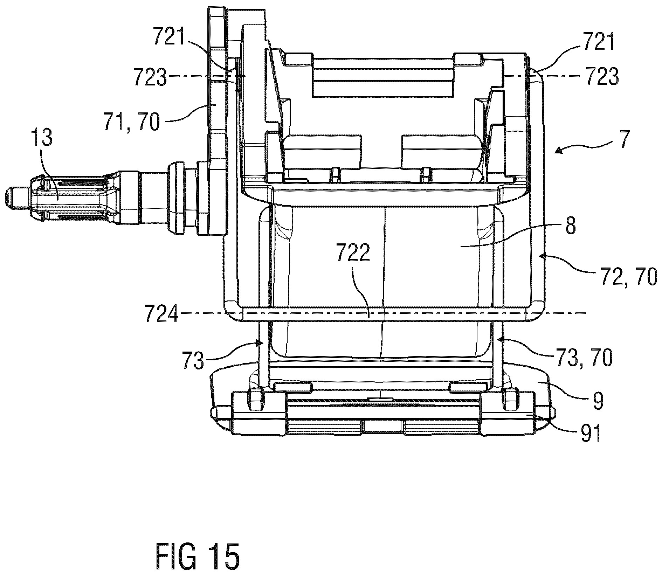

**Figur 15** zeigt schematisch in einer Seitenansicht die Gehäuseeinheit 8 mit dem Gelenkmechanismus 7, insbesondere dem Mehrgelenkmechanismus mit den Lenkern 70, und ohne Sensoreinheit 6 und ohne Grundträger 5. Dabei kann der zweite Lenker 72 beispielsweise als ein Bügellenker ausgebildet sein. Der erste Lenker 71 ist der Antriebslenker, welcher mit der Abtriebswelle 13 des Antriebs 11 bewegungsgekoppelt ist. Der zweite Lenker 72 und der dritte Lenker 73 sind aufgrund der Verbindung über die Gehäuseeinheit 8 mit dem ersten Lenker 71 bewegungsgekoppelt und sind als Abtriebslenker ausgebildet.

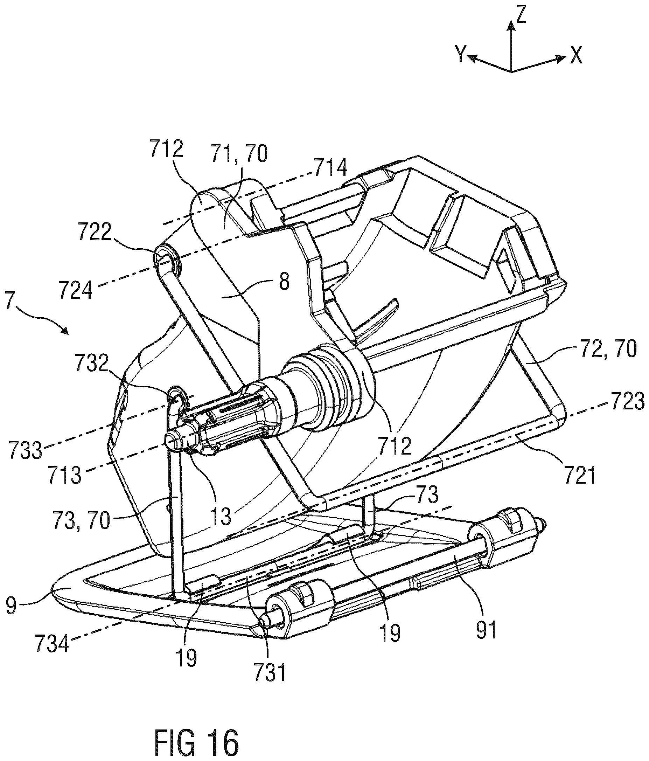

**Figur 16** zeigt schematisch in einer perspektivischen Darstellung die Gehäuseeinheit 8 mit dem Gelenkmechanismus 7, insbesondere dem Mehrgelenkmechanismus mit den Lenkern 70, und ohne Sensoreinheit 6 und ohne Grundträger 5. Dabei sind der zweite Lenker72 und der dritte Lenker 73 als Bügellenker ausgebildet. Deren zweiten Lenkerenden 722 und 732 des bügelförmigen zweiten Lenkers 72 beziehungsweise des bügelförmigen dritten Lenkers 73 sind beidseitig an der Gehäuseeinheit 8 angelenkt. Deren gegenüberliegendes jeweiliges erstes Lenkerende 721 bzw. 731, insbesondere ein die Bügel verbindender Stab, sind einfach an dem Grundträger 5 (in **Figuren 2** **und** **3** dargestellt) beziehungsweise an dem Verschlusselement 9 angelenkt. Beispielsweise sind Rastzungen 19 zur beweglichen, insbesondere drehbaren, Aufnahme der ersten Lenkerenden 721 und 731 vorgesehen.

Der erste Lenker 71 ist ein Stablenker und ist einseitig an der Gehäuseeinheit 8 und einseitig an dem Grundträger 5 angelenkt (dargestellt in **Figuren 2** **und** **3****).**

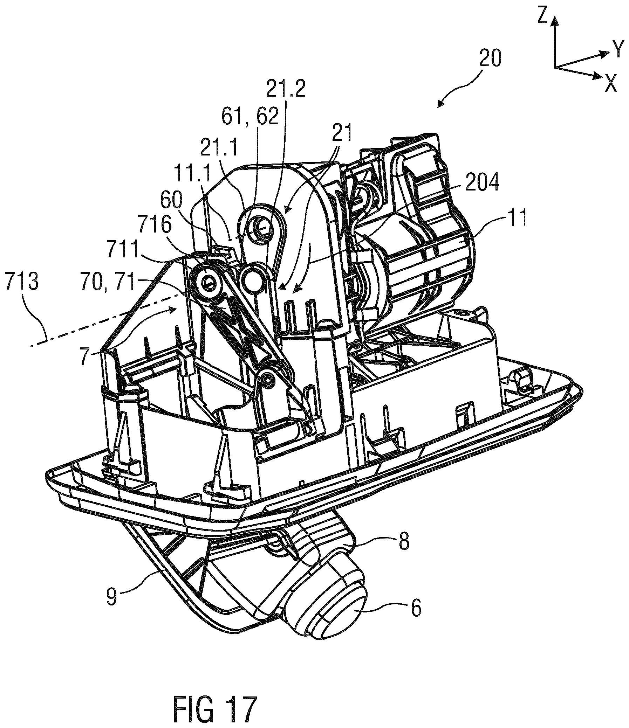

**Figur 17** zeigt schematisch in perspektivischer Darstellung eine alternative Ausführungsform einer Vorrichtung 20 mit dem Antrieb 11 und indirekter Kopplung mit dem Gelenkmechanismus 7 und dessen Lenkern 70.

Die Vorrichtung 20 unterscheidet sich von der zuvor beschriebenen Vorrichtung 2 nur in der Kopplung des Antriebs 11 mit dem Gelenkmechanismus 7 - direkt für die Vorrichtung 2 und indirekt für die Vorrichtung 20. Im nachfolgenden werden nur die Unterschiede im Detail beschrieben. Die übereinstimmenden Komponenten der Vorrichtungen 2 und 20 sind zuvor anhand der Figuren 1 bis 16 beschrieben.

Der Antrieb 11 ist, wie in Figur 17 gezeigt, indirekt über einen Zwischengelenkmechanismus 21 mit dem ersten Lenker 71 des Gelenkmechanismus 7 zur Verstellung der Sensoreinheit 6 oder der Gehäuseeinheit 8 mit Sensoreinheit 6 (wie dargestellt) bewegungsgekoppelt.

Der als Antriebslenker ausgebildete erste Lenker 71 ist indirekt von einem Antriebshebel 21.1 des Zwischengelenkmechanismus 21 angetrieben.

Bei der indirekten Kopplung von Antrieb 11 und erstem Lenker 71 über den Zwischengelenkmechanismus 21 sind die Abtriebsachse 11.1 des Antriebs 11 und die Lenkerachse (= die ortsfeste Drehachse 713) des ersten Lenkers 71 versetzt zueinander angeordnet.

Bei der indirekten Kopplung können sich der Antrieb 11, der Antriebshebel 21.1 des Zwischengelenkmechanismus 21 sowie der als Antriebslenker ausgebildete erste Lenker 71 in die gleiche Richtung 204 bewegen.

Bei der indirekten Kopplung von Antrieb 11 und erstem Lenker 71 ist zwischen dem Antrieb 11 und dem als Antriebslenker ausgebildeten ersten Lenker 71 der Zwischengelenkmechanismus 21 angeordnet. Der Zwischengelenkmechanismus 21 kann beispielsweise als ein Kniehebelmechanismus ausgebildet sein. Insbesondere handelt sich um einen Kniehebelmechanismus mit einer Totpunktlage.

Im ausgefahrenen Zustand (der Betriebsposition 101, wie in Figur 17 gezeigt) und/oder im eingefahrenen Zustand (der Ruheposition 100, analog in Figur 2 gezeigt) der Sensoreinheit 6 ist diese mittels des Kniehebelmechanismus sicher fixiert (auch "verriegelt" genannt). Insbesondere ist die Sensoreinheit 6 mittels des Zwischengelenkmechanismus 21 derart in einer ihrer Endpositionen fixiert, dass diese Position nicht einfach per Hand oder durch Fahrzeugvibrationen geöffnet beziehungsweise geschlossen werden kann. Alternativ kann anstelle des Kniehebelmechanismus ein selbsthemmendes Getriebe vorgesehen sein.

Ein erster Hebel des beispielsweise als Kniehebelmechanismus ausgebildeten Zwischengelenkmechanismus 21 bildet den Antriebshebel 21.1. Ein zweiter Hebel des beispielsweise als Kniehebelmechanismus ausgebildeten Zwischengelenkmechanismus 21 bildet einen Abtriebshebel 21.2. Der Antriebshebel 21.1 ist mit dem Antrieb 11, insbesondere dessen mechanischem Abtrieb, gekoppelt. Der Abtriebshebel 21.2 ist wiederum mit dem als Antriebslenker ausgebildeten ersten Lenker 71 gekoppelt.

Bevorzugt kann der als Kniehebelmechanismus ausgebildete Zwischengelenkmechanismus 21 als ein bistabiler Kniehebelmechanismus ausgebildet sein. Der bistabile Kniehebelmechanismus kann beispielsweise zwei Stellungen aufweisen: eine erste stabile Stellung und eine zweite stabile Stellung. Die erste stabile Stellung korrespondiert mit der Ruheposition 100 der Sensoreinheit 6 und/oder der verschließenden Stellung 103 des Verschlusselements 9, dargestellt analog in Figur 2. Die zweite stabile Stellung korrespondiert mit der Betriebsposition 101 der Sensoreinheit 6 und/oder der freigebenden Stellung 104 des Verschlusselements 9, dargestellt in Figur 17.

Die Bewegung des Antriebs 11 indirekt über den Zwischengelenkmechanismus 21 bewirkt, dass der als Antriebslenker ausgebildete erste Lenker 71 entlang der, beispielsweise bogenförmigen, kreissegmentförmigen oder gekrümmten, Fläche, insbesondere der Führungsrippe 50, des Grundträgers 5 zwischen der Ruheposition 100 und der Betriebsposition 101 gleitet. Durch die Auslegung des Zwischengelenkmechanismus 21 als bistabiler Kniehebelmechanismus kann dieser in seinen Endpositionen, der Ruheposition 100 und der Betriebsposition 101, jeweils fixiert werden.

Am ersten Lenkerende 711 des ersten Lenkers 71 ist ein Zapfen 716 zur ortsfesten Lagerung im Grundträger 5 (dargestellt in Figur 17) vorgesehen.

Zur ortsfesten Lagerung des Zapfens 716 ist ein Lager 60 vorgesehen. Das Lager 60 kann darüber hinaus als ein separater Endanschlag 61 zur Begrenzung der Bewegung des Zwischengelenkmechanismus 21 und/oder des ersten Lenkers 71 ausgebildet sein. Beispielsweise weist das Lager 60 als separaten Endanschlag 61 mindestens einen Radialvorsprung 62 auf.

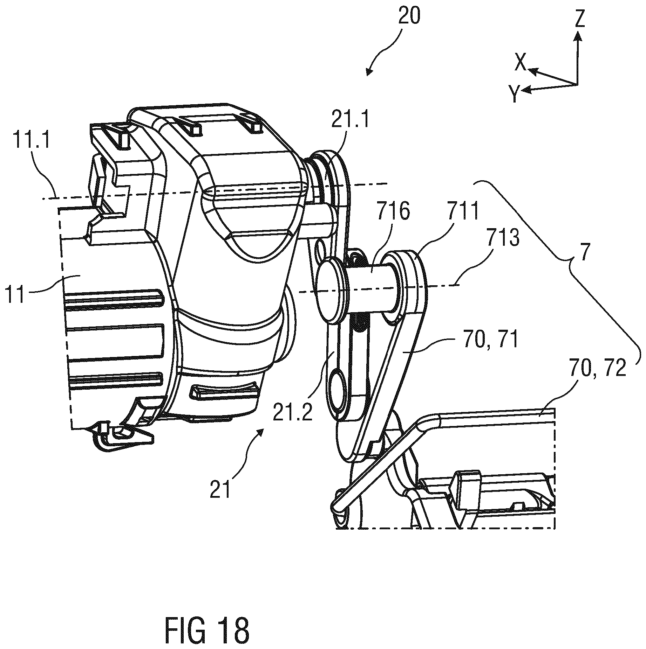

**Figur 18** zeigt schematisch die Vorrichtung 20 nach Figur 17 ohne Grundträger 5 in der ausgefahrenen Position, der Betriebsposition 101.

### BEZUGSZEICHENLISTE

- 1: Fahrzeug
- 2: Vorrichtung
- 3: Motorhaube
- 4: Heckdeckel
- 5: Grundträger
- 6: Sensoreinheit
- 7: Gelenkmechanismus
- 8: Gehäuseeinheit
- 9: Verschlusselement
- 10: Federelement
- 11: Antrieb
- 11.1: Abtriebsachse
- 12: Getriebe
- 13: Abtriebswelle
- 14: Befestigungsmittel
- 15: Anschlusselemente
- 16: weitere Befestigungsmittel
- 17: Gehäuse
- 18: weiteres Anschlusselement
- 19: Rastzunge

- 20: alternative Vorrichtung
- 21: Zwischengelenkmechanismus
- 21.1: Antriebshebel
- 21.2: Abtriebshebel

- 50: Führungsrippe
- 50.1: Führungsrolle
- 51: Öffnung
- 52: vorderes Trägerteil
- 53: hinteres Trägerteil
- 54: Endanschlag
- 55: Steckeröffnung
- 56: Rand
- 57: Dichtung
- 58: Verstärkungselement
- 59: Trägerwand
- 60: Lager
- 61: separater Endanschlag
- 62: Radialvorsprung

- 70: Lenker
- 700: Gelenk

- 71: erster Lenker
- 711, 712: Lenkerende
- 713, 714: Drehachsen
- 715: Vorsprung
- 716: Zapfen

- 72: zweiter Lenker
- 721, 722: Lenkerende
- 723, 724: Drehachsen
- 73: dritter Lenker
- 731, 732: Lenkerende
- 733, 734: Drehachsen

- 81: erste Gehäuseseite
- 82: zweite Gehäuseseite

- 91: Lagerende

- 100: Ruheposition der Sensoreinheit
- 101: Betriebsposition der Sensoreinheit
- 102: Zwischenposition der Sensoreinheit
- 103: verschließende Stellung
- 104: freigebende Stellung

- 200: bogenförmige Bewegung der Gehäuseeinheit/Sensoreinheit
- 201: bogenförmige Teilbewegung des Gelenkmechanismus
- 202: bogenförmige Teilbewegung des Gelenkmechanismus
- 203: bogenförmige Teilbewegung des Verschlusselements
- 204: Drehrichtung

- X: Längsrichtung
- Y: Querrichtung
- Z: Vertikalrichtung

## Patentansprüche

1. Vorrichtung (20) für ein Fahrzeug (1), insbesondere ein Kraftfahrzeug, umfassend zumindest:
- einen Grundträger (5) mit einer Öffnung (51) und einem bewegbaren Verschlusselement (9) zum Freigeben oder Verschließen der Öffnung (51),
- eine Sensoreinheit (6) mit einer diese Sensoreinheit (6) haltenden Gehäuseeinheit (8), die in dem Grundträger (5) bewegbar angeordnet ist, und
- einen Gelenkmechanismus (7),
wobei die Gehäuseeinheit (8) mittels des Gelenkmechanismus (7) in dem Grundträger (5) zwischen einer ersten Position und einer zweiten Position bewegbar ist, in welcher die Gehäuseeinheit (8) mit der Sensoreinheit (6) zumindest teilweise aus der Öffnung (51) herausragt, und
wobei der Gelenkmechanismus (7) als ein Mehrlenkermechanismus ausgebildet ist und mindestens drei Lenker (70), insbesondere ein erster Lenker (71), ein zweiter Lenker (72) und ein dritter Lenker (73), umfasst, und wobei der erste Lenker (71) und der zweite Lenker (72) jeweils mit einem ersten Lenkerende (711, 721) ortsfest an dem Grundträger (5) angelenkt sind und jeweils mit einem zweiten Lenkerende (712, 722) ortsbeweglich an der Gehäuseeinheit (8) oder der Sensoreinheit (6) angelenkt sind und der dritte Lenker (73) zwischen der Gehäuseeinheit (8) und dem Verschlusselement (9) oder zwischen dem Grundträger (5) und dem Verschlusselement (9) angelenkt ist,
wobei ein Antrieb (11) vorgesehen ist, welcher indirekt über einen Zwischengelenkmechanismus (21) mit dem ersten Lenker (71), der als Antriebslenker ausgebildet ist, bewegungsgekoppelt ist und wobei der Zwischengelenkmechanismus (21) als ein Kniehebelmechanismus ausgebildet ist.

2. Vorrichtung (20) nach Anspruch 1, wobei der Mehrlenkermechanismus derart ausgebildet und eingerichtet ist, dass die Gehäuseeinheit (8) beim Bewegen von der ersten Position der Sensoreinheit (6) in die zweite Position der Sensoreinheit (6) eine kontinuierliche Ausfahrbewegung ausführt.

3. Vorrichtung (20) nach Anspruch 2, wobei der Mehrlenkermechanismus derart ausgebildet und eingerichtet ist, dass die Gehäuseeinheit (8) beim Bewegen von einer Ruheposition (100) der Sensoreinheit (6) in eine Betriebsposition (101) der Sensoreinheit (6) eine kontinuierliche bogenförmige Ausfahrbewegung ausführt.

4. Vorrichtung (20) nach Anspruch 3, wobei der Mehrlenkermechanismus derart ausgebildet und eingerichtet ist, dass gleichzeitig mit einer Ausfahrbewegung der Sensoreinheit (6) von der Ruheposition (100) in die Betriebsposition (101) das Verschlusselement (9) von einer die Öffnung (51) verschließenden Stellung (103) in eine die Öffnung (51) freigebende Stellung (104) bewegbar ist oder umgekehrt mit einer Einfahrbewegung der Sensoreinheit (6) von der Betriebsposition (101) in die Ruheposition (100) das Verschlusselement (9) von der die Öffnung (51) freigebenden Stellung (104) in die die Öffnung (51) verschließende Stellung (103) bewegbar ist.

5. Vorrichtung (20) nach einem der vorhergehenden Ansprüche, wobei die Lenker (70) jeweils als ein einfacher Lenker (70) mit je zwei Gelenken (700) ausgebildet sind.

6. Vorrichtung (20) nach einem der vorhergehenden Ansprüche, wobei der jeweilige Lenker (70) als ein L-förmiger Lenker, ein U-förmiger Lenker, ein I-förmiger Lenker oder ein stabförmiger Lenker ausgebildet ist.

7. Vorrichtung (20) nach einem der vorhergehenden Ansprüche, wobei die als ein Stablenker oder I-förmiger Lenker ausgebildeten Lenker (70) jeweils nur an einer Seite der Gehäuseeinheit (8) angelenkt sind.

8. Vorrichtung (20) nach einem der vorhergehenden Ansprüche, wobei zumindest zwei der Lenker (70), die zwischen der Gehäuseeinheit (8) und dem Grundträger (5) angelenkt sind, in der Ruheposition (100) im Wesentlichen parallel und in einem Abstand zueinander angeordnet sind.

9. Vorrichtung (20) nach einem der vorhergehenden Ansprüche, wobei zumindest einer der Lenker (70), der zwischen der Gehäuseeinheit (8) und dem Verschlusselement (9) angelenkt ist, in der Ruheposition (100) im Wesentlichen senkrecht zur Öffnungsebene einer Öffnung (51) oder einer Verschlussebene des Verschlusselements (9) angeordnet ist.

10. Vorrichtung (20) nach einem der vorhergehenden Ansprüche, wobei die Gehäuseeinheit (8) eine Bogenform aufweist.

11. Vorrichtung (20) nach einem der vorhergehenden Ansprüche, wobei die Sensoreinheit (6) in der Ruheposition (100) senkrecht zur Öffnung (51) angeordnet ist.

12. Vorrichtung (20) nach einem der vorhergehenden Ansprüche, wobei mindestens ein Endanschlag (54, 61) zur Begrenzung einer Ausfahrbewegung oder einer Einfahrbewegung der Gehäuseeinheit (8) und/oder der Sensoreinheit (6) vorgesehen ist.

13. Fahrzeug (1) mit einer Vorrichtung (20) nach einem der vorhergehenden Ansprüche.

## Claims

1. Device (20) for a vehicle (1), in particular a motor vehicle, comprising at least:
- a main carrier (5) with an opening (51) and with a movable closure element (9) for opening up or closing off the opening (51),
- a sensor unit (6) with a housing unit (8) which holds said sensor unit (6) which is arranged in a movable manner in the main carrier (5), and
- an articulation mechanism (7),
wherein the housing unit (8) is, by means of the articulation mechanism (7), movable in the main carrier (5) between a first position and a second position, in which the housing unit (8) with the sensor unit (6) protrudes at least partially from the opening (51), and
wherein the articulation mechanism (7) is in the form of a multi-link mechanism and comprises at least three links (70), in particular a first link (71), a second link (72) and a third link (73), and wherein the first link (71) and the second link (72) are articulated in a positionally fixed manner on the main carrier (5), in each case by way of a first link end (711, 721), and are articulated in a positionally movable manner on the housing unit (8) or the sensor unit (6), in each case by way of a second link end (712, 722), and the third link (73) is articulated between the housing unit (8) and the closure element (9) or between the main carrier (5) and the closure element (9),
wherein provision is made of a drive (11) which is indirectly coupled in terms of movement to the first link (71), which is in the form of a drive link, via an intermediate articulation mechanism (21), and wherein the intermediate articulation mechanism (21) is in the form a toggle-lever mechanism.

2. Device (20) according to Claim 1, wherein the multi-link mechanism is designed and configured in such a way that the housing unit (8) performs a continuous extension movement during the movement from the first position of the sensor unit (6) into the second position of the sensor unit (6).

3. Device (20) according to Claim 2, wherein the multi-link mechanism is designed and configured in such a way that the housing unit (8) performs a continuous arcuate extension movement during the movement from a rest position (100) of the sensor unit (6) into an operating position (101) of the sensor unit (6).

4. Device (20) according to Claim 3, wherein the multi-link mechanism is designed and configured in such a way that, at the same time as an extension movement of the sensor unit (6) from the rest position (100) into the operating position (101), the closure element (9)is movable from a position (103) in which it closes off the opening (51) into a position (104) in which it opens up the opening (51) or, conversely, at the same time as a retraction movement of the sensor unit (6) from the operating position (101) into the rest position (100), the closure element (9) is movable from the position (104) in which it opens up the opening (51) into the position (103) in which it closes off the opening (51).

5. Device (20) according to one of the preceding claims, wherein the links (70) are in each case in the form of a simple link (70) with in each case two joints (700).

6. Device (20) according to one of the preceding claims, wherein the respective link (70) is in the form of an L-shaped link, a U-shaped link, an I-shaped link or a rod-shaped link.

7. Device (20) according to one of the preceding claims, wherein the links (70) in the form of a rod-type link or an I-shaped link are articulated in each case only on one side of the housing unit (8).

8. Device (20) according to one of the preceding claims, wherein at least two of the links (70) articulated between the housing unit (8) and the main carrier (5) are arranged substantially parallel and with a spacing to one another in the rest position (100).

9. Device (20) according to one of the preceding claims, wherein at least one of the links (70) articulated between the housing unit (8) and the closure element (9) is arranged substantially perpendicularly to the opening plane of an opening (51), or to a closure plane of the closure element (9), in the rest position (100).

10. Device (20) according to one of the preceding claims, wherein the housing unit (8) has an arcuate shape.

11. Device (20) according to one of the preceding claims, wherein the sensor unit (6) is arranged perpendicularly to the opening (51) in the rest position (100).

12. Device (20) according to one of the preceding claims, wherein provision is made of at least one end stop (54, 61) for limiting an extension movement or a retraction movement of the housing unit (8) and/or of the sensor unit (6).

13. Vehicle (1) having a device (20) according to one of the preceding claims.

## Revendications

1. Dispositif (20) pour un véhicule (1), notamment un véhicule automobile, comprenant au moins :
- un support de base (5) avec une ouverture (51) et un élément de fermeture mobile (9) pour libérer ou fermer l'ouverture (51),
- une unité de capteur (6) avec une unité de boîtier (8) maintenant cette unité de capteur (6), qui est agencée de manière mobile dans le support de base (5), et
- un mécanisme d'articulation (7),
l'unité de boîtier (8) pouvant être déplacée au moyen du mécanisme d'articulation (7) dans le support de base (5) entre une première position et une deuxième position, dans laquelle l'unité de boîtier (8) avec l'unité de capteur (6) fait saillie au moins partiellement hors de l'ouverture (51), et
le mécanisme d'articulation (7) étant configuré sous la forme d'un mécanisme à bras multiples et comprenant au moins trois bras (70), notamment un premier bras (71), un deuxième bras (72) et un troisième bras (73), et le premier bras (71) et le deuxième bras (72) étant chacun articulés de manière fixe par une première extrémité de bras (711, 721) sur le support de base (5) et étant chacun articulés de manière mobile par une deuxième extrémité de bras (712, 722) sur l'unité de boîtier (8) ou l'unité de capteur (6), et le troisième bras (73) étant articulé entre l'unité de boîtier (8) et l'élément de fermeture (9) ou entre le support de base (5) et l'élément de fermeture (9),
un entraînement (11) étant prévu, dont le déplacement est couplé indirectement, par l'intermédiaire d'un mécanisme d'articulation intermédiaire (21), au premier bras (71) qui est configuré sous forme de bras d'entraînement, et le mécanisme d'articulation intermédiaire (21) étant configuré sous la forme d'un mécanisme à genouillère.

2. Dispositif (20) selon la revendication 1, dans lequel le mécanisme à bras multiples est configuré et adapté de telle sorte que l'unité de boîtier (8) effectue un déplacement de sortie continu lors du déplacement de la première position de l'unité de capteur (6) vers la deuxième position de l'unité de capteur (6).

3. Dispositif (20) selon la revendication 2, dans lequel le mécanisme à bras multiples est configuré et adapté de telle sorte que l'unité de boîtier (8) effectue un déplacement de sortie continu en forme d'arc lors du déplacement d'une position de repos (100) de l'unité de capteur (6) vers une position de fonctionnement (101) de l'unité de capteur (6).

4. Dispositif (20) selon la revendication 3, dans lequel le mécanisme à bras multiples est configuré et adapté de telle sorte que, simultanément à un déplacement de sortie de l'unité de capteur (6) de la position de repos (100) vers la position de fonctionnement (101), l'élément de fermeture (9) peut être déplacé d'une position (103) fermant l'ouverture (51) vers une position (104) libérant l'ouverture (51), ou inversement avec un déplacement de rentrée de l'unité de capteur (6) de la position de fonctionnement (101) à la position de repos (100), l'élément de fermeture (9) peut être déplacé de la position (104) libérant l'ouverture (51) à la position (103) fermant l'ouverture (51).

5. Dispositif (20) selon l'une quelconque des revendications précédentes, dans lequel les bras (70) sont configurés chacun sous la forme d'un bras simple (70) avec chacun deux articulations (700).

6. Dispositif (20) selon l'une quelconque des revendications précédentes, dans lequel le bras respectif (70) est configuré sous la forme d'un bras en forme de L, d'un bras en forme de U, d'un bras en forme de I ou d'un bras en forme de barre.

7. Dispositif (20) selon l'une quelconque des revendications précédentes, dans lequel les bras (70) configurés sous la forme d'un bras en forme de barre ou d'un bras en forme de I sont articulés chacun uniquement sur un côté de l'unité de boîtier (8).

8. Dispositif (20) selon l'une quelconque des revendications précédentes, dans lequel au moins deux des bras (70) articulés entre l'unité de boîtier (8) et le support de base (5) sont agencés essentiellement parallèles et à distance l'un de l'autre dans la position de repos (100).

9. Dispositif (20) selon l'une quelconque des revendications précédentes, dans lequel au moins l'un des bras (70) articulés entre l'unité de boîtier (8) et l'élément de fermeture (9) est agencé, dans la position de repos (100), essentiellement perpendiculairement au plan d'ouverture d'une ouverture (51) ou à un plan de fermeture de l'élément de fermeture (9).

10. Dispositif (20) selon l'une quelconque des revendications précédentes, dans lequel l'unité de boîtier (8) présente une forme arquée.

11. Dispositif (20) selon l'une quelconque des revendications précédentes, dans lequel l'unité de capteur (6) est agencée perpendiculairement à l'ouverture (51) dans la position de repos (100).

12. Dispositif (20) selon l'une quelconque des revendications précédentes, dans lequel au moins une butée d'extrémité (54, 61) est prévue pour limiter un déplacement de sortie ou un déplacement de rentrée de l'unité de boîtier (8) et/ou de l'unité de capteur (6).

13. Véhicule (1) avec un dispositif (20) selon l'une quelconque des revendications précédentes.
